# EUROPÄISCHE PATENTSCHRIFT

(11) **EP 3 568 256 B1**
(45) Veröffentlichungstag und Bekanntmachung des Hinweises auf die Patenterteilung: **05.11.2025**
(21) Anmeldenummer: 17804858.3
(22) Anmeldetag: 21.11.2017
(51) Int. Cl.: B23K 11/00, B23K 11/20, B23K 11/11, F16B 17/00, B29C 65/00, B23K 11/34, F16B 11/00

(54) **VERFAHREN ZUR HERSTELLUNG EINES BAUTEILVERBUNDES VON MINDESTENS ZWEI BAUTEILEN**
METHOD FOR THE PRODUCTION OF A COMPONENT BONDING OF AT LEAST TWO COMPONENTS
PROCÉDÉ DE PRODUCTION D'UN ASSEMBLAGE DE COMPOSANTS COMPRENANT AU MOINS DEUX COMPOSANTS

(30) Priorität: 16.01.2017 DE 102017200564
(43) Veröffentlichungstag der Anmeldung: 20.11.2019
(73) Patentinhaber: Bayerische Motoren Werke Aktiengesellschaft, 80809 München (DE)
(72) Erfinder: GLÜCK, Bernhard, 82256 Fürstenfeldbruck (DE); KIRSCHNER, Robert, 82140 Olching (DE); MEINHARDT, Josef, 80939 München (DE); SCHWEIGHART, Franz-Xaver, 94527 Aholming (DE)
(86) Internationale Anmeldenummer: PCT/EP2017/079874
(87) Internationale Veröffentlichungsnummer: WO 2018/130330

(56) Entgegenhaltungen:
- EP-A1- 3 034 280
- DE-A1- 10 015 713
- DE-A1- 102010 020 569
- DE-A1- 102010 031 709
- DE-C2- 19 730 907
- US-A1- 2005 091 831
- US-A1- 2005 286 970

## Beschreibung

Die Erfindung betrifft ein Verfahren zur Herstellung eines Bauteilverbundes von mindestens zwei Bauteilen.

Der vermehrte Einsatz von Leichtbauwerkstoffen führt in der Fahrzeugindustrie zu immer neuen fertigungstechnischen Herausforderungen. Jahrzehntelang eingesetzte Fügeverfahren, die auf die Verwendung von Stahlwerkstoffen zugeschnitten sind, lassen sich nur bedingt auf moderne Leichtbauwerkstoffe übertragen.

Beispielsweise ist heutzutage ein direktes Verschweißen oder Verlöten von Bauteilen nicht immer möglich, bspw. wenn Werkstoffpaarungen aus unterschiedlichen Metallwerkstoffen, wie z.B. Aluminium und Stahl, oder artfremden Werkstoffen, wie z.B. Metallen und Faserverbundwerkstoffen, gefügt werden sollen.

Aus dem Stand der Technik ist es hierzu bekannt, in einen der beiden Fügepartner ein Fügehilfsteil einzubringen, das aus einem Material ausgebildet ist, welches ein Verschweißen mit dem anderen Fügepartner ermöglicht. Die verwendeten Fügehilfsteile weisen eine niet- oder nagelartige Form auf. Sie werden mit ihrem Schaft in ein erstes Bauteil eingebracht, wobei sie sich mit ihrem Kopf auf dem ersten Bauteil abstützen, und werden mit ihrem Fuß bzw. Schaft mit dem anderen Bauteil verschweißt. Hierzu wird z.B. auf die Patentschriften DE 100 15 713 A1, DE 100 60 390 B4, DE 10 2004 025 492 A1 und DE 10 2010 053 608 A1 verwiesen.

Aus der Druckschrift DE 10 2010 031 709 A1 ist weiterhin ein Bauteilverbund mit einem solchen Fügehilfsteil bekannt, das verwendet wird um die Bauteile mittels Widerstandsschweißen zu verbinden und das an seinem Kopf zudem einen Funktionsabschnitt aufweist, der z.B. ein Befestigen weiterer Bauteile ermöglicht.

Die Druckschrift EP 3 034 280 A1 offenbart ein Verfahren zum Einbringen eines Fügehilfselements in ein Bauteil, bei dem zunächst eine Bohrung in dem Bauteil ausgebildet wird und das Fügehilfselement dann durch Einpressen im Bauteil fixiert wird. Die Bohrung kann im Randbereich angefast werden, wodurch das Fügehilfselement einen Hinterschnitt ausbildet und formschlüssig in der Bohrung fixiert wird.

Ein formschlüssiges Fixieren durch Ausbilden eines Hinterschnitts zwischen einem Bauteil und einem darin eingepressten Fügehilfselement ist weiterhin aus der Druckschrift DE 10 2010 020 569 A1, der US 2005/ 0 286 970 A1 und der Druckschrift US2005/0091831 A1 bekannt.

Vor diesem Hintergrund ist es die Aufgabe der Erfindung, eine flexible Möglichkeit anzugeben, mit der Bauteile aus unterschiedlichsten Materialien gefügt werden können und die gegenüber dem Stand der Technik verbessert ist oder zumindest einen Vorteil aufweist.

Gelöst wird die Aufgabe durch ein Verfahren zur Herstellung eines Bauteilverbundes nach Patentanspruch 1. Weitere vorteilhafte Ausgestaltungen ergeben sich aus den Unteransprüchen und der nachfolgenden Beschreibung. Es wird ein Bauteil angegeben, in dem an mindestens einer Fügestelle, an der später eine Fügeverbindung mit einem weiteren Bauteil ausgebildet werden soll, ein Fügehilfselement mit einem Halteabschnitt in das Bauteil eingepresst ist. Das Fügehilfselement weist weiterhin einen Funktionsabschnitt auf, mit dem zumindest eine weitere Funktion realisierbar ist. Bevorzugt grenzt der Funktionsabschnitt an den Halteabschnitt an. Erfindungsgemäß ist der Halteabschnitt des Fügehilfselements in einem Durchgangsloch angeordnet, und das Durchgangsloch ist an zumindest einem Randbereich durch eine Einprägung verbreitert, wobei der Halteabschnitt des Fügehilfselements in das Durchgangsloch eingepresst ist und kraft- und/oder formschlüssig mit der Lochwandung verbunden ist und der Halteabschnitt in die Einprägung eingreift.

Weiterhin wird ein Bauteilverbund von mindestens zwei Bauteilen angegeben, die an mindestens einer Fügestelle gefügt sind. Der Bauteilverbund umfasst ein erstes Bauteil und ein zweites Bauteil, wobei in dem ersten Bauteil an der Fügestelle ein Fügehilfselement mit einem Halteabschnitt in das Bauteil eingepresst ist, und das Fügehilfselement weiterhin einen, vorzugsweise an den Halteabschnitt angrenzenden, Funktionsabschnitt aufweist, mit dem zumindest eine weitere Funktion realisierbar ist. Erfindungsgemäß ist der Halteabschnitt des Fügehilfselements in einem Durchgangsloch angeordnet, und das Durchgangsloch ist an zumindest einem Randbereich durch eine Einprägung verbreitert, wobei der Halteabschnitt des Fügehilfselements in das Durchgangsloch eingepresst ist und kraft- und/oder formschlüssig mit der Lochwandung verbunden ist und der Halteabschnitt in die Einprägung eingreift. Das Fügehilfselement ist stoffschlüssig mit dem zweiten Bauteil oder mit einem in dem zweiten Bauteil vorgesehenen zweiten Fügehilfselement verbunden.

Das Durchgangsloch kann z.B. durch Schneiden oder Stanzen ausgebildet sein und weist vorzugsweise eine geschlossene Loch- bzw. Schnittkontur auf. Zu den Bauteiloberflächen ist das Durchgangsloch jeweils durch einen Randbereich begrenzt. Das Fügehilfselement ist mit dem ersten Bauteil formschlüssig quer zur Fügeachse verbunden. Die Lochgeometrie des Durchgangslochs und die Außengeometrie des Fügehilfselements sind zumindest teilweise entsprechend aufeinander abgestimmt.

Das Durchgangsloch und/oder die Einprägung können z.B. einen kreisförmigen Querschnitt oder alternative Querschnitte aufweisen. So kann die Einbringung eines Klebstoffs erleichtert sein, wenn der Loch- und/oder Einprägungsquerschnitt z.B. eine gezackte oder mehreckige Form aufweisen, oder das Durchgangsloch mit Einprägung kronenförmig ausgestaltet ist.

Im Bereich der Einprägung ist der Lochquerschnitt vergrößert, z.B. ist der Durchmesser des Durchgangslochs im Bereich der Einprägung vergrößert. Der Halteabschnitt des Fügehilfselements bildet im Bereich der Einprägung einen Hinterschnitt aus, der das Fügehilfselement in eine Richtung formschlüssig gegen ein Durchdrücken durch das Durchgangsloch sichert. Entgegen der Vermutung, dass sich die im Bereich der Einprägung reduzierte Bauteildicke nachteilig auf die Festigkeit der Verbindung auswirkt, hat sich gezeigt, dass überraschend hohe Festigkeiten erzielbar sind. Als Ursache wird hier vermutet, dass dies auf den Vorgang des Einprägens zurückzuführen ist, wodurch eine Werkstoffverfestigung im Randbereich der Einprägung erzielt wird, die im Zusammenspiel mit dem nachfolgenden Einpressen des Halteelements noch gesteigert wird. Weiterhin wurde festgestellt, dass durch das Einbringen der Einprägung auch eine Reduzierung der Wasserstoffversprödung stattfindet und einer Kantenrissempfindlichkeit in diesem Bereich entgegengewirkt werden kann.

Die Einprägung kann einseitig ausgebildet sein. Vorzugsweise ist die Einprägung umlaufend um das Durchgangsloch im gesamten Randbereich ausgebildet. Die Einprägung kann sich z.B. über bis zu 20% der Tiefe des Durchgangslochs erstrecken, um bis zu 40 % oder bis zur halben Tiefe des Durchgangslochs. Es kann auch vorteilhaft sein, wenn sich die Einprägung um mehr als 50% und insbesondere um mehr als 60% der Tiefe des Durchgangslochs erstreckt.

Als besonders vorteilhaft hat es sich herausgestellt, wenn in einer Ausgestaltung die Einprägung als umlaufende Fase ausgestaltet ist. Im Bereich der Fase ist die Lochwandung gegenüber der Längsachse des Durchgangslochs geneigt und der Durchmesser des Durchgangslochs vergrößert sich im Bereich der Fase zum Rand des Durchgangslochs hin kontinuierlich. Im Bereich der Fase kann die Lochwandung z.B. um einen Winkel gegenüber der Längsachse des Durchgangslochs geneigt sein, der in einem Bereich von 30 bis 60 Grad oder in einem Bereich von 40 bis 50 Grad liegt und insbesondere 45 Grad betragen kann.

In einer Ausgestaltung kann dieser Effekt auf beiden Seiten des Bauteils genutzt werden, wozu an beiden Randbereichen der Lochwandung eine umlaufende Einprägung oder Fase eingeprägt ist, in die der Halteabschnitt des Fügehilfselements eingreift. Die Einprägungen bzw. Fasen können symmetrisch ausgebildet sein, so dass auf beiden Seiten des Durchgangslochs identische Einprägungen oder Fasen geprägt werden, oder asymmetrisch ausgebildet sein, d.h. mit unterschiedlichem Formen oder Winkeln und/oder über eine unterschiedliche Tiefe.

Als Halteabschnitt des Fügehilfselements wird derjenige Abschnitt des Fügehilfselements bezeichnet, der im Belastungsfall eine Kraft auf das Bauteil übertragen kann. Vorteilhafter Weise kann die Dicke des Halteabschnitts reduziert werden und kann im eingepressten Zustand geringer als oder im Wesentlichen gleich der Dicke des Bauteils sein. Die Formulierung "im Wesentlichen gleich" ist in diesem Zusammenhang so zu verstehen, dass die Dicke des Halteelements nach dem Einpressen gleich der Dicke des Bauteil oder fertigungsbedingt z.B. wenige Zehntel Millimeter dicker sein kann als die Bauteildicke. Das Durchgangsloch mit Einprägung bzw. mit Anfasung bietet die Möglichkeit, das Halteelement formschlüssig in Richtung der Fügeachse im Bauteil zu fixieren, so dass der Halteabschnitt beispielsweise kopflos, d.h. ohne seitlich über den Durchmesser des Durchgangslochs hinauskragenden Abschnitt, ausgebildet sein kann. Vorzugsweise kann der Halteabschnitt eine einfach herzustellende Geometrie aufweisen und z.B. zylinderförmig ausgebildet sein.

In einer Ausgestaltung ist der Halteabschnitt des Fügehilfselements vollständig in dem Durchgangsloch aufgenommen, d.h. eine Kraftübertragung zwischen Bauteil und Halteabschnitt erfolgt ausschließlich an der Lochwandung des Durchgangslochs. Hierzu kann der Halteabschnitt z.B. bündig mit den Bauteiloberflächen enden oder gegenüber diesen in das Durchgangsloch hinein zurückversetzt sein.

Eine Stirnfläche des Halteabschnitts, vorzugsweise eine auf der dem Funktionsabschnitt abgewandten Seite angeordnete Stirnfläche des Halteabschnitts, kann verwendet werden, um eine stoffschlüssige Verbindung mit dem zweiten Bauteil herzustellen. Hierzu kann es in einer Ausgestaltung vorteilhaft sein, wenn sich der Halteabschnitt durch das erste Bauteil hindurch erstreckt und zumindest bündig mit einer dem Funktionsabschnitt abgewandten Oberseite des ersten Bauteils ist oder über diese hinausragt. Sind im Bereich des Fügehilfselements Verbraucherabprägungen vorgesehen, so kann der Halteabschnitt gegenüber diesen vorstehen, jedoch gegenüber der restlichen Oberfläche des Bauteils zurückversetzt oder bündig zur restlichen Oberfläche ausgebildet sein. Die Stirnfläche des Halteabschnitts kann eben sein oder mit einer Struktur versehen sein, z.B. einem punktförmigen Überstand zur Zündung eines Lichtbogens. Weiterhin kann die Stirnfläche des Halteabschnitts auch gegenüber der Oberseite des ersten Bauteils zurückversetzt sein.

Darüber hinaus kann bei dem Einpressen des Fügehilfselements in das Bauteil zusätzlich ein Zwischenschichtelement, z.B. eine Folie zur Verhinderung von Kontaktkorrosion oder eine Klebeschicht, zwischen den Halteabschnitt und die Lochwandung eingebracht werden.

Das Fügehilfselement kann mit dem Zwischenschichtelement und/oder dem Bauteil, in das es eingepresst ist, zusätzlich stoffschlüssig verbunden sein.

Der Funktionsabschnitt des Fügehilfselements ist derart gestaltet, dass er eine zusätzliche Funktion bereitstellt, vorzugsweise eine Befestigungsfunktion. Hierzu kann der Funktionsabschnitt beispielsweise als Bolzenschaft, Gewindebolzen, Mutter, Stauchrohr oder als Teil einer Clipsverbindung ausgebildet sein. Der Funktionsabschnitt kann gegenüber dem Bauteil vorstehen, alternativ ist es auch denkbar, dass der Funktionsabschnitt in das Innere des Halteabschnitts integriert ist. Der Funktionsabschnitt kann bereits vor dem Einpressvorgang ausgebildet sein oder auch während des Einpressens durch ein entsprechend geformtes Presswerkzeug gebildet werden, z.B. durch Umformung eines Teils des Halteabschnitts. Ebenso kann das Fügehilfselement durch ein vorgeformtes Element, z.B. in der Art eines Gewindebuchsens oder Helicoils, ausgebildet sein.

Das stoffschlüssige Fügen kann z.B. durch Schweißen, Löten oder Kleben erfolgen oder durch eine Kombination davon. Ein solcher Bauteilverbund bietet sich an, um unterschiedliche Werkstoffe miteinander zu verbinden, die ohne weiteres nicht löt-, schweiß- oder klebbar wären, wie z.B. Verbindungen mit unterschiedlichen Metallen (z.B. Aluminium und Stahl) oder artfremden Werkstoffen (z.B. Faserverbundkunststoffe mit einem Metall). Gleichwohl ist es auch möglich, gleiche oder gleichartige Materialien bzw. Werkstoffe mit dem Verfahren zu verbinden.

Das Material des Fügehilfselements wird vorzugsweise so gewählt, dass es die für den jeweiligen Verbindungsprozess vorgesehene Eignung hat, z.B. eine entsprechende Löt-, Schweiß- oder Klebeignung mit dem Material des zweiten Bauteils bietet.

Das Fügehilfselement kann mit dem Grundwerkstoff des zweiten Bauteils stoffschlüssig gefügt werden. Hierzu ist es insbesondere vorteilhaft, wenn das Fügehilfselement aus einem Material ausgebildet ist, das mit dem Grundwerkstoff des zweiten Bauteils ausreichend stoffschlüssig fügbar ist, vorzugsweise ausreichend schweiß- oder lötbar ist.

**In** einer Ausgestaltung ist es vorgesehen, dass an der Fügestelle im zweiten Bauteil ein weiteres Fügehilfselement eingebracht ist und das Fügehilfselement des ersten Bauteils stoffschlüssig mit dem Fügehilfselement des zweiten Bauteils verbunden ist. Das weitere Fügehilfselement kann beispielsweise ein Metallbutzen sein, also ein kopf- und schaftloses Metallplättchen, das in das zweite Bauteil eingepresst wird. Das zweite Fügehilfselement kann, wie für den Halteabschnitt des ersten Fügehilfselements beschrieben, in ein ein- oder beidseitig mit Einprägung versehenes Durchgangsloch eingepresst sein. Die Einprägungen können vorzugsweise als Fasen ausgestaltet sein. Die Materialien der Fügehilfselemente werden vorzugsweise so gewählt, dass die Fügehilfselemente ausreichend gut miteinander stoffschlüssig fügbar sind, vorzugsweise ausreichend schweiß- oder lötbar sind. Als zweites Fügehilfselement kann zudem auch ein Fügehilfselement verwendet werden, wie es für das erste Fügehilfselement beschrieben ist, also mit einem entsprechenden Halteabschnitt und einem zusätzlichen Funktionsabschnitt.

In einer vorteilhaften Ausgestaltung ist das erste oder das zweite Bauteil oder beide Bauteile aus einem Leichtbauwerkstoff, wie z.B. einem Leichtmetall (z.B. Aluminium, Magnesium oder ihre Legierungen) oder aus einem Faserverbundkunststoff ausgebildet und die Fügehilfselemente sind aus Stahl ausgebildet. So ist es vorteilhafter Weise möglich, auch moderne Leichtbauwerkstoffe mit bestehenden Fügevorrichtungen, wie z.B. herkömmlichen Widerstandspunktschweißanlagen zu fügen. Das erste und zweite Bauteil können aus demselben oder unterschiedlichen Werkstoffen ausgebildet sein. Der Funktionsabschnitt kann z.B. verwendet werden um ein weiteres Bauteil an dem Bauteilverbund zu befestigen. Der Funktionsabschnitt kann z.B. in eine entsprechende korrespondierende Aufnahme im weiteren Bauteil eingeclipst oder eingepresst werden oder der Funktionsabschnitt kann Teil einer das weitere Bauteil fixierenden Schraubverbindung sein. Alternative Befestigungsmöglichkeiten sind denkbar.

Die Bauteile können vorzugsweise aus einem Blechmaterial, wie z.B. einem Stahlblech, Aluminium- oder Magnesiumblech, oder einem blechähnlichen Material ausgebildet sein, wie z.B. faserverstärktem Kunststoff (z.B. kohlenstofff-, glasfaser- oder aramidfaserverstärkt) oder es kann sich um ein Organoblech handeln. Grundsätzlich kann es sich auch um ein Gußteil oder Profilteil handeln, das an der Fügestelle blechähnlich ausgebildet ist. Die voranstehend beschriebene Bauteilverbindung eignet sich z.B. besonders für Materialstärken im Bereich von 0,5 mm bis 5 mm und insbesondere auch für Dünnbleche bzw. Feinbleche mit einer Stärke von 2,99 mm oder weniger.

Erfindungsgemäß handelt es sich bei dem Bauteilverbund um ein Karosseriebauteil, und insbesondere um ein Zusammenbauteil (Sandwichbauteil). Als nicht Teil der Erfindung kann es sich z.B. auch um ein Fahrwerksbauteil oder ein Interieurbauteil handeln.

Der Bauteilverbund kann eine einzige Fügestelle aufweisen, vorzugsweise sind die Bauteile jedoch an mehreren Fügestellen miteinander verbunden. Die mehreren Fügestellen können identisch ausgebildet sein oder auch unterschiedlich.

Der Bauteilverbund kann weiterhin ein drittes oder weitere Bauteile aufweisen, welche ebenfalls mit Hilfe des beschriebenen Verfahrens oder mittels anderer bekannter Fügeverfahren verbunden sind.

Es wird ein Verfahren zur Herstellung eines Bauteils mit Fügehilfselement angegeben mit den Schritten:
- Erzeugen eines Durchgangslochs an wenigstens einer Fügestelle in einem Bauteil,
- Einbringen einer Einprägung so, dass das Durchgangsloch in wenigstens einem Randbereich verbreitert ist,
- Einpressen eines Fügehilfselements in das Durchgangsloch so, dass ein Halteabschnitt des Fügehilfselements kraft- und/oder formschlüssig mit der Lochwandung verbunden ist und in die Einprägung eingreift, wobei das Fügehilfselement weiterhin einen Funktionsabschnitt aufweist.

Weiterhin wird ein Verfahren zur Herstellung eines Bauteilverbundes von mindestens zwei Bauteilen angegeben, die an mindestens einer Fügestelle gefügt sind. Das Verfahren umfasst die Schritte:
- Erzeugen eines Durchgangslochs an wenigstens einer Fügestelle in einem ersten Bauteil,
- Einbringen einer Einprägung so, dass das Durchgangsloch in wenigstens einem Randbereich verbreitert ist,
- Einpressen eines Fügehilfselements in das Durchgangsloch so, dass ein Halteabschnitt des Fügehilfselements kraft- und/oder formschlüssig mit der Lochwandung verbunden ist und in die Einprägung eingreift, wobei das Fügehilfselement weiterhin einen Funktionsabschnitt aufweist,
- Positionieren und Ausrichten eines zweiten Bauteils relativ zum ersten Bauteil und
- Ausbilden einer stoffschlüssigen Verbindung an der Fügestelle durch Schweißen, Löten oder Verkleben, wobei das Fügehilfselement mit dem Grundwerkstoff des zweiten Bauteils stoffschlüssig verbunden wird oder mit einem zweiten Fügehilfselement, das an der Fügestelle in dem zweiten Bauteil vorgesehen ist.

Durch den Eingriff des Halteabschnitts in den Bereich der Einprägung bzw. Fase ist ein Formschluss auch in eine Richtung entlang der Fügeachse gegeben.

Vorteilhafter Weise wird das zweite Bauteil so positioniert, dass es auf der dem Funktionselement abgewandten Seite des ersten Bauteils angeordnet ist.

Das Durchgangsloch kann z.B. durch Stanzen oder Schneiden ausgebildet werden. Die Einprägung wird z.B. durch Prägen mittels eines entsprechend geformten Prägewerkzeugs ausgebildet. Dies kann zeitgleich mit dem Erzeugen des Durchgangslochs oder in einem separaten Fertigungsschritt erfolgen, z.B. vor oder nach dem Erzeugen des Durchgangslochs. Handelt es sich bei dem Bauteil mit Durchgangsloch um ein Bauteil aus einem Faserverbundkunststoff (FVK) so kann das Durchgangsloch mit der Einprägung beispielsweise bereits bei der Herstellung des FVK-Bauteils, z.B. beim Verpressen des Bauteilhalbzeugs, ausgebildet werden. Auch eine solche Einprägung erzielt die beschriebene Verfestigung aufgrund eines erhöhten Faservolumenanteils im Randbereich des Durchgangslochs.

Wird das Durchgangsloch in einem Metallbauteil ausgebildet, so kann es in einer Ausgestaltung vorteilhaft sein, wenn das Einprägen der Einprägung bzw. Fase vor dem Ausbilden des Durchgangslochs erfolgt. Das Einprägen der Einprägung bzw. Fase erzeugt eine Einkerbung im Metallbauteil, wobei eine eventuell vorhandene Bauteilbeschichtung oder Oxidschicht an den Kerbflächen zumindest teilweise erhalten bleibt.

Darüber hinaus kann bei dem Einpressen des Fügehilfselements in das Bauteil zusätzlich eine Schutzschicht, z.B. eine Folie zur Verhinderung von Kontaktkorrosion, zwischen das Fügehilfselement und die Lochwandung eingebracht werden.

Mit dem Verfahren können die Bauteile in der Art einer Vorfixierung verbunden sein und anschließend durch weitere Fügeverfahren zusätzlich miteinander verbunden werden. Ebenso ist es möglich, dass der Bauteilverbund nur durch das voranstehend beschriebene Verfahren ausgebildet wird, wobei die Bauteile vorzugsweise an mehreren Fügestellen verbunden werden.

Wird zwischen dem Fügehilfselement und dem Bauteil zusätzlich eine weitere Schicht eingebracht (z.B. zur elektrochemischen Trennung oder eine Klebeschicht) so kann durch das Verpressen und/oder eine Wärmebehandlung zusätzlich eine stoffschlüssige Verbindung erreicht werden. Die Wärmebehandlung kann vor, während oder nach dem Einpressvorgang erfolgen. Ebenso kann durch ein Verschweißens des Fügehilfselements mit einem weiteren Bauteil zusätzlich eine stoffschlüssige Verbindung zwischen dem Fügehilfselement und demjenigen Bauteil entstehen, in das das Fügehilfselement eingepresst ist.

Das Einpressen des Fügehilfselements erfolgt z.B. mit einem geeigneten Werkzeug, z.B. einem Presswerkzeug oder einem C-Bügel. Hierzu wird der Halteabschnitt in das entsprechende Durchgangsloch eingeführt und dort verpresst, wobei das Material des Halteabschnitts dauerhaft verformt wird und an die Lochwandung kraftschlüssig angepresst wird. Weiterhin kann in einigen Ausgestaltungen vorgesehen sein, dass zudem das Material des Halteabschnitts in den eingeprägten bzw. angefasten Bereich fließt und dort jeweils einen Hinterschnitt ausbildet. Das Fügehilfselement ist somit auch in Richtung der Fügeachse F formschlüssig im Bauteil fixiert.

Wird an dem anderen Randbereich der Lochwandung ebenfalls eine umlaufende Einprägung bzw. Fase aufgeprägt, so kann diese wie für die erste Einprägung bzw. Fase beschrieben erzeugt werden. Nach dem Einpressen des Halteabschnitts in das Durchgangsloch weist der Halteabschnitt dann an beiden Einprägungen bzw. Fasen einen Hinterschnitt aus, der ihn im Durchgangsloch fixiert.

In einer nicht beanspruchten Ausgestaltung ist es möglich, das Durchgangsloch und/oder die Einprägung nicht in einem separaten Schritt, sondern durch das Einbringen des Fügehilfselements selbst zu erzeugen. Das Durchgangsloch kann z.B. erzeugt werden, indem ein selbstfurchendes Fügehilfselement, z.B. mittels Drehschlag, in das Bauteil eingetrieben wird.

Das Verfahren wird zur Herstellung des voranstehend beschriebenen Bauteils mit Fügehilfselement bzw. zur Herstellung des Bauteilverbundes verwendet, so dass dieselben technischen Wirkungen und Vorteile erreicht werden, wie sie hierzu beschrieben sind.

Mit der Erfindung ist die kostengünstige und reproduzierbare Herstellung von Bauteilverbunden und Zusammenbauteilen, insbesondere in Mischbauweise, möglich. Es wird ermöglicht, Bauteilverbunde mit Leichtbauwerkstoffen, wie z.B. Aluminium, in bestehenden Schweißanlagen und mit bestehenden Schweißprozessen fügen zu können, da z.B. durch den Einsatz von Fügehilfselementen aus Stahl auch Aluminiumbauteile miteinander oder Aluminium- mit Stahlbauteilen gefügt werden können. Der Bauteilverbund kann besonders flach ausgeführt werden durch den im Bauteil versenkten Halteabschnitt, mit dem das Fügehilfselement am Bauteil befestigt ist. Der Bauteilverbund zeichnet sich zudem durch eine hohe Festigkeit bei hoher Flexibilität der Gestaltung der Fügeverbindung aus. Zudem ist der Bauteilverbund auch für Dünnblechverbindungen geeignet.

Die oben beschriebenen Eigenschaften, Merkmale und Vorteile dieser Erfindung sowie die Art und Weise, wie diese erreicht werden, werden klarer und deutlicher verständlich anhand der Zeichnung und im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen in schematischer Darstellung:
- Figur 1:: eine Schnittansicht eines beispielhaften Bauteilverbundes,
- Figur 2: eine Schnittansicht eines weiteren beispielhaften Bauteilverbundes,
- Figur 3: eine Vorgehensweise zum Einpressen des Fügehilfselements, und
- Figur 4: eine Schnittansicht eines weiteren Bauteilverbundes.

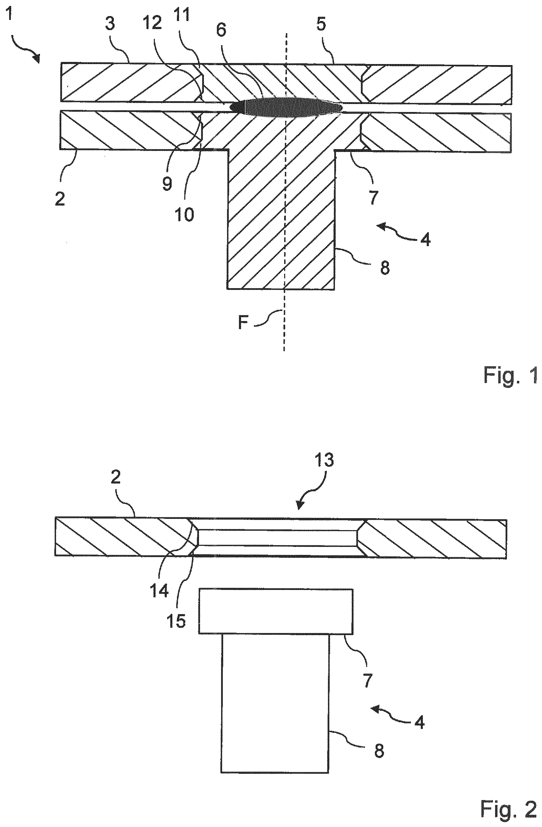

Figur 1 zeigt in einer Schnittdarstellung die Fügestelle eines Bauteilverbundes 1, der zwei Bauteile 2, 3 umfasst. Der Bauteilverbund 1 ist mit dem erfindungsgemäßen Verfahren hergestellt. Der Bauteilverbund 1 kann mehrere solche Fügestellen aufweisen, die identisch oder unterschiedlich ausgebildet sein können.

Das erste Bauteil 2 ist ein blechförmiges Bauteil aus einem Leichtbauwerkstoff, wie z.B. Aluminium oder einem Faserverbundkunststoff. Der Begriff Aluminium umfasst auch die entsprechenden Aluminiumlegierungen. Das zweite Bauteil 3 ist ein blechförmiges Bauteil und ist ebenfalls aus einem Leichtbauwerkstoff ausgebildet. Die beiden Bauteile 2, 3 sind an der Fügestelle indirekt mittels eines ersten Fügehilfselements 4, das in das erste Bauteil 2 eingepresst ist, und eines zweiten Fügehilfselements 5, das in das zweite Bauteil 3 eingepresst ist, durch einen die beiden Fügehilfselemente stoffschlüssig verbindenden Schweißpunkt 6 fest gefügt. Die Fügehilfselemente 4 und 5 sind jeweils aus einem Stahlwerkstoff ausgebildet. Die Verschweißung wurde mittels eines herkömmlichen Widerstandpunktschweißprozesses durchgeführt. Ebenso sind andere Schweißverfahren möglich oder längliche Schweißnähte. Alternativ zur Verschweißung könnten die Fügehilfselemente auch durch eine Lötverbindung oder Klebverbindung miteinander gefügt sein. Ggf. können die Bauteile zusätzlich an anderer Stelle als der Fügestelle verklebt sein.

Das erste Fügehilfselement 4 weist einen Halteabschnitt 7 auf, mit dem es kraft- und formschlüssig in das erste Bauteil 2 eingepresst ist und einen Funktionsabschnitt 8, der in den Figuren nur schematisch dargestellt ist, und der ausgebildet ist, um eine weitere Funktion zu erfüllen, vorzugsweise eine weitere Befestigungsmöglichkeit zu bieten. Hierzu kann der Funktionsabschnitt 8 z.B. als Teil einer Clipsverbindung, als Stift oder mit einem Gewinde ausgestaltet sein.

Der Halteabschnitt 7 des ersten Fügehilfselements 4 ist vollständig im ersten Bauteil 2 aufgenommen. Er stützt sich nicht auf einer Oberfläche des ersten Bauteils 2 ab, sondern ist durch zwei Hinterschnitte 9 und 10 im ersten Bauteil 2 auch in Richtung der Fügeachse F formschlüssig fixiert.

Figur 2 zeigt das erste Bauteil 2 und das erste Fügehilfselement 4 bevor dieses in das erste Bauteil 2 eingepresst wird. Das erste Fügehilfselement 4 hat einen kopffreien Halteabschnitt 7 mit einer im Wesentlichen zylindrischen Form. Der Halteabschnitt 7 wird in ein Durchgangsloch 13 eingepresst, das im Vorfeld im ersten Bauteil 2 erzeugt wurde, z.B. durch Schneiden oder Stanzen. Im Randbereich des Loches 13 ist jeweils eine Einprägung 14 und 15 in Form einer Fase eingeprägt. Der Halteabschnitt 8 wird nun in das Durchgangsloch 13 eingepresst, wobei sich das Material des Halteabschnitts 8 dauerhaft verformt und eine kraftschlüssige Verbindung mit der Lochwandung eingeht. Um die Einprägungen 14, 15 bildet der Halteabschnitt 8 zudem jeweils einen Hinterschnitt aus.

Das zweite Fügehilfselement 5 ist ein in das zweite Bauteil 3 eingepresster Metallbutzen, der ebenfalls über zwei Hinterschnitte 11 und 12 formschlüssig in Richtung der Fügeachse F im zweiten Bauteil fixiert ist. Das Einpressen des zweiten Fügehilfselements erfolgt wie voranstehend für das erste Fügehilfselement 4 beschrieben.

In einem nachfolgenden Schritt wird das zweite Bauteil zu dem ersten Bauteil positioniert und die Schweißverbindung 6 ausgebildet, wozu z.B. die Fügehilfselemente mit den Elektroden einer Widerstandspunktschweißvorrichtung kontaktiert werden können.

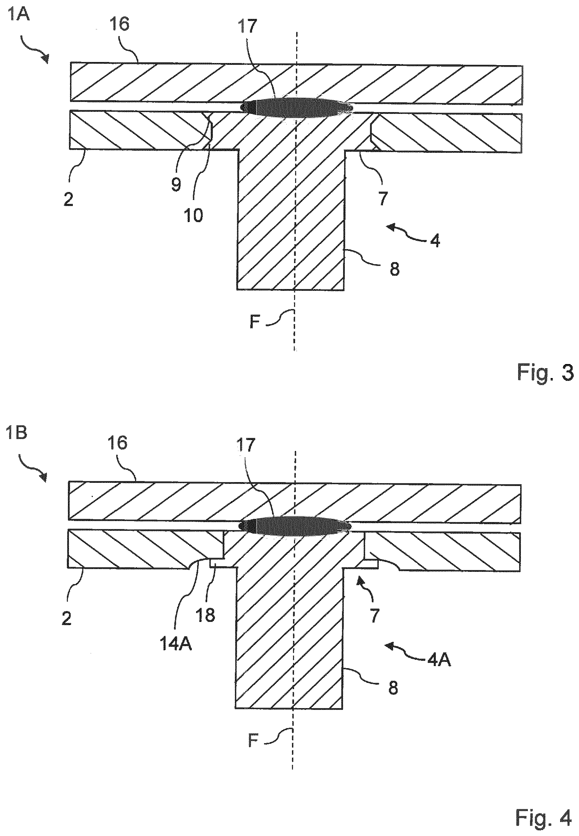

Figur 3 zeigt einen alternativen Bauteilverbund 1A. Sofern identische Bezugszeichen verwendet sind, gilt das zu Figur 1 gesagte entsprechend. Der Bauteilverbund 1A umfasst das erste Bauteil 2 mit seinem Fügehilfselement 4 sowie ein drittes Bauteil 16, das aus einem Stahlmaterial ausgebildet ist. Die Schweißverbindung 17 verbindet das Fügehilfselement 4 stoffschlüssig mit dem Grundwerkstoff des dritten Bauteils 16.

Im Gegensatz zu herkömmlichen Bauteilverbunden mit Fügehilfselementen kann eine deutlich geringere Höhe des Bauteilverbundes erreicht werden, da die Fügehilfselemente bei Bedarf bündig mit den Werkstückoberflächen abschließen können. Selbstverständlich ist es möglich, die Fügehilfselemente z.B. im Bereich der Fügestelle über die Werkstückoberfläche hinaus vorstehen zu lassen, z.B. zur gezielten Bildung eines Zündfunkens.

Ebenso kann bei dem Einpressen des Fügehilfselements in das Bauteil zusätzlich eine nicht dargestellte Schutzschicht, z.B. eine Folie zur Verhinderung von Kontaktkorrosion, zwischen das Fügehilfselement und die Lochwandung eingebracht werden.

Der gezeigte Abstand zwischen den Bauteilen ist nicht erforderlich. Im Bauteilverbund können die Bauteile auch direkt aufeinander aufliegen.

Obwohl in den Figuren jeweils zwei Einprägungen in Form von Fasen gezeigt sind, können die Durchgangslöcher in den Bauteilen auch jeweils nur an einer Seite mit einer Einprägung bzw. Fase versehen sein. Ebenso ist die Form der Einprägung nicht auf die in den Figuren 1 bis 3 gezeigte Fasengeometrie beschränkt, vielmehr sind Abwandlungen möglich, wie z.B. die in Figur 4 gezeigte kuppelförmige Einprägung 14A. Auch kann das Fügehilfselement bereits vor dem Einpressen eine Form aufweisen, die an der Einprägung hinterschnittig anliegt, wie z.B. das in Figur 4 gezeigte zylinderförmige Fügehilfselement 4A mit einem verbreiterten Kopfabschnitt 18 im Bereich des Halteabschnitts 7.

In den Figuren 1-3 ist aus Gründen der Veranschaulichung der Verlauf der Lochwandung so dargestellt, als ob die geneigte Lochwandung im Bereich der Fase direkt in einen senkrechten Lochwandungsabschnitt übergeht. In der Realität kann zwischen dem geneigten Wandungsabschnitt und dem senkrechtem Wandungsabschnitt jedoch ein kragenförmiges umlaufendes Plateau ausgebildet sein, das durch die Geometrie des Prägestempels bedingt ist.

Durch die angeprägte Fase im Durchgangsloch und das eingepresste Fügehilfselement werden sehr hohe Festigkeiten erreicht. Beispielsweise wurde in einem Versuch in einem Blech aus einer 5000er Aluminiumlegierung (Grundfestigkeit von 120 bis 140 N/mm²) mit einer Dicke von 2,5 mm ein Durchgangsloch mit einer Durchmesser von 12mm im Kern ausgebildet. An den Randbereichen wurde eine Fase angeprägt unter einem Winkel von 45 Grad mit einer Prägetiefe von 0,7 mm und einer Plateaubreite von 0,4 mm. Ein zylindrischer Blechbutzen aus S355 mit einer Dicke von 4 mm und einem Durchmesser vor dem Verpressen von 11,7 mm wurde in das Durchgangsloch eingepresst. Nach dem Verpressen ergaben sich Auszugskräfte für den Butzen von 8,5 bis 12,6 kN für jede Seite.

Die Ausführungsbeispiele sind nicht maßstabsgetreu und nicht beschränkend. Abwandlungen im Rahmen des fachmännischen Handelns im Sinne der beigefügten Ansprüche sind möglich.

## Patentansprüche

1. Verfahren zur Herstellung eines Bauteilverbundes (1, 1A) von mindestens zwei Bauteilen (2, 3), die an mindestens einer Fügestelle gefügt sind, wobei der Bauteilverbund Teil einer Fahrzeugkarosserie ist, mit den Schritten:
Herstellung eines ersten Bauteils (2) mit Fügehilfselement (4) mit den Schritten:
Erzeugen eines Durchgangslochs (13) an wenigstens einer Fügestelle in einem Bauteil (2),
Einbringen einer Einprägung (14) so, dass das Durchgangsloch (13) in wenigstens einem Randbereich verbreitert ist und eine Bauteildicke im Bereich der Einprägung (14) reduziert ist,
nachfolgendes Einpressen eines Fügehilfselements (4) in das Durchgangsloch (13) so, dass ein Halteabschnitt (7) des Fügehilfselements (4) kraft- und/oder formschlüssig mit der Lochwandung verbunden ist und in die Einprägung (14) eingreift und der Halteabschnitt (7) im Bereich der Einprägung (14) einen Hinterschnitt ausbildet, der das Fügehilfselement (4) in eine Richtung formschlüssig gegen ein Durchdrücken durch das Durchgangsloch (13) sichert, wobei das Fügehilfselement (4) weiterhin einen Funktionsabschnitt (8) aufweist,
und
Positionieren und Ausrichten eines zweiten Bauteils (3) relativ zum ersten Bauteil (2) und
Ausbilden einer stoffschlüssigen Verbindung an der mindestens einen Fügestelle durch Schweißen, Löten oder Verkleben, wobei das Fügehilfselement (4) mit dem Grundwerkstoff des zweiten Bauteils (3) stoffschlüssig verbunden wird oder mit einem zweiten Fügehilfselement (5), das an der Fügestelle in dem zweiten Bauteil (3) vorgesehen ist.

2. Verfahren nach Patentanspruch 1,
bei dem eine zweite Einprägung (15) so ausgebildet wird, dass das Durchgangsloch an dem anderen Randbereich ebenfalls verbreitert ist und der Halteabschnitt (7) nach dem Einpressen an beiden Einprägungen (14; 15) einen Hinterschnitt (11, 12) ausbildet.

3. Verfahren nach einem der vorangehenden Patentansprüche,
**dadurch gekennzeichnet, dass**
die Einprägung (14; 15) als eingeprägte Fase ausgebildet ist.

4. Verfahren nach einem der vorangehenden Patentansprüche,
**dadurch gekennzeichnet, dass**
der Halteabschnitt (7) vollständig in dem Durchgangsloch (13) aufgenommen ist.

5. Verfahren nach einem der vorangehenden Patentansprüche, **dadurch gekennzeichnet, dass**
sich der Halteabschnitt (7) durch das Bauteil (2) hindurch erstreckt und zumindest bündig mit einer dem Funktionsabschnitt (8) abgewandten Oberseite des Bauteils (2) ist oder über diese hinausragt.

6. Verfahren nach einem der vorangehenden Patentansprüche,
**dadurch gekennzeichnet, dass**
zwischen Halteabschnitt und dem Bauteil weiterhin ein Zwischenschichtelement eingebracht ist.

7. Verfahren nach einem der vorangehenden Patentansprüche,
**dadurch gekennzeichnet, dass**
der Halteabschnitt (7) mit dem Zwischenschichtelement und/oder dem Bauteil (2), zusätzlich stoffschlüssig verbunden ist.

8. Verfahren nach einem der vorangehenden Patentansprüche, **dadurch gekennzeichnet, dass**
der Funktionsabschnitt (8) als Bolzenschaft, Gewindebolzen, Mutter, Stauchrohr oder als Teil einer Clipsverbindung ausgebildet ist.

9. Verfahren nach einem der vorangehenden Patentansprüche,
**dadurch gekennzeichnet, dass**
das erste und/oder zweite Bauteil (2, 3) aus einem Leichtbauwerkstoff ausgebildet sind und die Fügehilfselemente (4, 5) aus Stahl ausgebildet sind.

## Claims

1. A method for producing a component assembly (1, 1A) of at least two components (2, 3) that are joined at at least one joining location, wherein the component assembly is part of a vehicle body, comprising the steps:
Producing a first component (2) with a joining aid element (4) with the steps:
Creating a through-hole (13) at at least one joining location in a component (2),
Introducing an impression (14) such that the through-hole (13) is widened in at least one edge area and a component thickness is reduced in the area of the impression (14),
Subsequently pressing a joining aid element (4) into the through-hole (13) such that a retaining section (7) of the joining aid element (4) is connected to the hole wall in a force-fit and/or form-fit manner and engages in the impression (14), and the retaining section (7) forms an undercut in the area of the impression (14) that secures the joining aid element (4) in one direction in a form-fit manner against being pushed through the through-hole (13), wherein the joining aid element (4) further has a functional section (8),
and
Positioning and aligning a second component (3) relative to the first component (2)
and
Forming a material-bonded connection at the at least one joining location by welding, soldering or adhesive bonding, wherein the joining aid element (4) is materially bonded to the base material of the second component (3) or to a second joining aid element (5) that is provided at the joining location in the second component (3).

2. The method according to patent claim 1,
in which a second impression (15) is formed such that the through-hole is also widened at the other edge area and the retaining section (7) forms an undercut (11, 12) at both impressions (14; 15) after pressing in.

3. The method according to any one of the preceding patent claims,
**characterized in that**
the impression (14; 15) is formed as an impressed chamfer.

4. The method according to any one of the preceding patent claims,
**characterized in that**
the retaining section (7) is completely accommodated in the through-hole (13).

5. The method according to any one of the preceding patent claims,
**characterized in that**
the retaining section (7) extends through the component (2) and is at least flush with a top side of the component (2) facing away from the functional section (8) or protrudes beyond it.

6. The method according to any one of the preceding patent claims,
**characterized in that**
an intermediate layer element is further introduced between the retaining section and the component.

7. The method according to any one of the preceding patent claims,
**characterized in that**
the retaining section (7) is additionally materially bonded to the intermediate layer element and/or the component (2).

8. The method according to any one of the preceding patent claims,
**characterized in that**
the functional section (8) is formed as a bolt shaft, threaded bolt, nut, upsetting tube or as part of a clip connection.

9. The method according to any one of the preceding patent claims,
**characterized in that**
the first and/or second component (2, 3) are made of a lightweight material and the joining aid elements (4, 5) are made of steel.

## Revendications

1. Procédé de fabrication d'un assemblage de composants (1, 1A) d'au moins deux composants (2, 3) qui sont joints à au moins un emplacement de jonction, l'assemblage de composants faisant partie d'une carrosserie de véhicule, comprenant les étapes suivantes :
Fabrication d'un premier composant (2) avec un élément d'aide à la jonction (4) comprenant les étapes suivantes :
Création d'un trou traversant (13) à au moins un emplacement de jonction dans un composant (2),
Introduction d'une empreinte (14) de telle sorte que le trou traversant (13) soit élargi dans au moins une zone de bord et qu'une épaisseur de composant soit réduite dans la zone de l'empreinte (14),
Insertion subséquente par pression d'un élément d'aide à la jonction (4) dans le trou traversant (13) de telle sorte qu'une section de retenue (7) de l'élément d'aide à la jonction (4) soit reliée à la paroi du trou de manière par force et/ou par forme et s'engage dans l'empreinte (14), et que la section de retenue (7) forme une contre-dépouille dans la zone de l'empreinte (14) qui sécurise l'élément d'aide à la jonction (4) dans une direction par forme contre un enfoncement à travers le trou traversant (13), l'élément d'aide à la jonction (4) ayant en outre une section fonctionnelle (8), et
Positionnement et alignement d'un deuxième composant (3) par rapport au premier composant (2) et
Formation d'une liaison par matière à l'emplacement de jonction au moins par soudage, brasage ou collage, l'élément d'aide à la jonction (4) étant lié par matière au matériau de base du deuxième composant (3) ou à un deuxième élément d'aide à la jonction (5) prévu à l'emplacement de jonction dans le deuxième composant (3).

2. Procédé selon la revendication 1,
dans lequel une deuxième empreinte (15) est formée de telle sorte que le trou traversant soit également élargi dans l'autre zone de bord et que la section de retenue (7) forme une contre-dépouille (11, 12) au niveau des deux empreintes (14 ; 15) après l'insertion par pression.

3. Procédé selon l'une quelconque des revendications précédentes,
**caractérisé en ce que**
l'empreinte (14 ; 15) est formée comme un chanfrein imprimé.

4. Procédé selon l'une quelconque des revendications précédentes,
**caractérisé en ce que**
la section de retenue (7) est entièrement logée dans le trou traversant (13).

5. Procédé selon l'une quelconque des revendications précédentes,
**caractérisé en ce que**
la section de retenue (7) s'étend à travers le composant (2) et est au moins affleurante avec une face supérieure du composant (2) opposée à la section fonctionnelle (8) ou dépasse celle-ci.

6. Procédé selon l'une quelconque des revendications précédentes,
**caractérisé en ce que**
un élément de couche intermédiaire est en outre introduit entre la section de retenue et le composant.

7. Procédé selon l'une quelconque des revendications précédentes,
**caractérisé en ce que**
la section de retenue (7) est en outre liée par matière à l'élément de couche intermédiaire et/ou au composant (2).

8. Procédé selon l'une quelconque des revendications précédentes,
**caractérisé en ce que**
la section fonctionnelle (8) est conçue comme une tige de boulon, un boulon fileté, un écrou, un tube de refoulement ou comme partie d'une connexion par clip.

9. Procédé selon l'une quelconque des revendications précédentes,
**caractérisé en ce que**
le premier et/ou le deuxième composant (2, 3) sont fabriqués en un matériau léger et les éléments d'aide à la jonction (4, 5) sont fabriqués en acier.
